# EUROPEAN PATENT SPECIFICATION

(11) **EP 3 578 734 B1**
(45) Date of publication and mention of the grant of the patent: **28.12.2022**
(21) Application number: 18175672.7
(22) Date of filing: 04.06.2018
(51) Int. Cl.: B32B 3/06, B32B 3/18, B32B 5/02, B32B 7/09, B32B 7/12, B32B 19/06, E04F 15/022, E04F 15/10, E04F 13/16, E04F 13/18, E04F 13/08, B32B 37/12

(54) **METHOD FOR RECYCLING OF TILE MATERIAL**
VERFAHREN ZUR WIEDERVERWERTUNG VON FLIESENMATERIAL
PROCÉDÉ DE RECYCLAGE DE MATÉRIAU DE DALLES

(43) Date of publication of application: 11.12.2019
(73) Proprietor: Saint-Gobain Ecophon AB, 260 61 Hyllinge (SE)
(72) Inventor: Karlsson, Ola, 222 41 Lund (SE); Ekberg, Rasmus, 269 92 Båstad (SE); Kervall, Mikael, 244 71 Dösjebro (SE); Månsson, Tommy, 252 27 Helsingborg (SE)
(74) Representative: AWA Sweden AB

(56) References cited:
- EP-A1- 1 152 094
- EP-A1- 2 568 091
- EP-A2- 0 449 414
- ES-A1- 2 224 849
- GB-A- 2 279 293
- US-A1- 2018 134 016

## Description

### Field of the invention

The present invention relates to a method for recycling of tile material and more specifically to such a method for recycling a tile material comprising compressed mineral fibre material.

### Background art

Tiles comprising compressed mineral fibre material, such as glass or stone wool, may be arranged in a room or in another accommodation and may serve a variety of purposes. The tiles may for instance be used for improving the acoustical characteristics of the room or for concealing wiring, piping, as well as devices related to heating, ventilation and air condition.

The tiles may be formed as horizontally arranged ceiling tiles, vertically arranged baffle elements, wall mounted elements or free standing screens.

When manufacturing such tiles, tile material in the form of waste material may be generated. The waste material may comprise rejected tiles and removed tile sections during shaping of the tiles.

During installation of the tiles, tile material in the form of residual material may be generated. The residual material may comprise tile sections removed from a tile during trimming or tiles remaining after completed installation.

When a tile system is demounted after end of life, tile material is formed by the tiles included in demounted the system.

Conventionally, the tile material generated during manufacturing, installation or demounting after end of life has been difficult to recycle in an efficient manner. Known solutions include grinding the tile material which subsequently may be used as land fill material or as raw material for producing new fibre material. The documents EP 0 449 414 A2 and EP 568 091 A1 disclose building elements made from recycling material.

### Summary of the invention

In view of that stated above, the object of the present invention is to provide an improved method for recycling of tile material comprising mineral fibre material.

It is also an object to provide such a method for recycling tile material in a cost efficient manner with a low environmental impact.

To achieve at least one of the above objects and also other objects that will be evident from the following description, a method having the features defined in claim 1 is provided according to the present invention. Preferred embodiments of the method will be evident from the dependent claims.

More specifically, there is provided according to the present invention a method for recycling of tile material according to claim 1.

Hereby, an improved method for recycling of tile material is provided.

The method comprises colleting tile material from different points in the life cycle of tiles comprising compressed mineral fibre material, i.e. during manufacturing of the tiles, during installation of the tiles and after end of life.

The collected tile material is converted into a plurality of body members which are used for assembling a baseboard by fixing the plurality of body members to a carrier layer, which baseboard subsequently is converted into at least two tiles. Hereby properties associated with the tile material, such as a sound absorbing property, may be preserved and re-used in the new tiles which is beneficial in view of cost and use of energy.

The fact that the plurality of body members is used for assembling a baseboard which subsequently is converted to at least two tiles have the effect of an improved degree of freedom when designing new tiles. Conventionally, tiles are made from baseboards of predetermined sizes which sets limitations on the tiles made of those baseboards. The inventive method on the other hand enables assembling of a baseboard of any desired size. The invention thus provides an improved flexibility regarding baseboard size which may be used for instance in order to manufacture large tiles or to manufacture tiles with an eliminated or low generation of waste material.

The tiles formed from the baseboard may be used as ceiling tiles, baffles, wall mounted elements or free standing screens.

According to an embodiment of the present invention, an adhesive may be used for fixing the plurality of body members to the carrier layer. Alternatively, the body members may be fixed to the carrier layer may means of a heat treatment, such as a welding operation, in which mineral fibres are melted and joined to the carrier layer in the interface between the plurality of rods and the carrier layer. It is also conceivable to fix the body members to the carrier layer in other ways, such as by stitching or by velcro fixing.

According to another embodiment, the step of producing a baseboard may also comprise fixing adjacent body members to each other. The adjacent body members may be fixed to each other by means of an adhesive or by a heat treatment, such as a welding operation, in which the mineral fibres are melted and joined together in the joint between the adjacent body members. Other solutions such as stitching or velcro fixing may also be employed.

According to yet another embodiment, the method may further comprise the step of removing any surface layer associated with the collected tile material before conversion of the tile material to a plurality of body members.

According to yet another embodiment, the step of assembling a baseboard may comprise arranging the plurality of body members on the carrier layer in a predetermined pattern. The plurality of body members may be arranged with a uniform orientation or with a non-uniform orientation in the predetermined pattern. For instance, by using body members having a rod shape with a rectangular cross section, the body members may be arranged in a brick pattern, in which all body members have a uniform orientation, or in a herringbone pattern, in which the body members are arranged in two different orientations.

Further, the plurality of body members may be arranged in a single tier or in at least two tiers in the predetermined pattern. When the plurality of body members is arranged in at least two tires, a first tire may comprise body members arranged in a first orientation, and a second tire may comprise body members arranged in a second orientation different from the first orientation.

By choosing suitable orientation, predetermined pattern and/or number of tiers, as desired property such as rigidity or sound absorption may be obtained in the tiles obtained from the assembled baseboard after conversion thereof.

According to yet another embodiment, the carrier layer may be chosen from the group consisting of a fabric, a veil, a non-woven mat, a non-woven tissue, a virgin baseboard or a combination thereof. For instance, the carrier layer may be a woven fibre glass fabric or a virgin baseboard provided with a woven glass fibre fabric on one major surface. By virgin baseboard is meant a premade baseboard comprising compressed mineral fibre material.

According to yet another embodiment, the step of assembling a baseboard may comprise fixing a top layer to the plurality of body members on a side opposite to the carrier layer. The top layer may be fixed to the plurality of body members by means of an adhesive or by a heat treatment in which mineral fibres are melted and joined to the top layer in the joint between the plurality of body members and the top layer. Alternatively, the top layer may be fixed by means of stitching or velcro fixing.

According to yet another embodiment, the step of conversion of the tile material into a plurality of body members may comprise producing body members of a uniform size and shape. Alternatively, body members of a non-uniform size and shape may be produced. The body member may be given a elongated rod shape with a rectangular cross section. Also other shapes of the body member are conceivable, such as an hour glass shape or a V-shape. The body members may also be given a shape enabling interlocking between adjacent body members.

The step of conversion of the tile material into a plurality of body members may comprise producing body members having a width in the range of 10 - 100 mm, a height in the range of 10 - 100 mm and a length in the range of 400 - 3 000 mm.

According to yet another embodiment, the step of conversion of the tile material into a plurality of body members and/or conversion of the baseboard into at least two tiles may comprise a cutting or sawing operation.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Fig. 1 is a flow chart illustrating the method for recycling tile material in accordance with the present invention.
Fig. 2 is a schematic perspective view illustrating an embodiment of step (2) of the inventive method.
Fig. 3 is a schematic perspective view illustrating an embodiment of step (3) of the inventive method.
Fig. 4 is a plan view illustrating a baseboard assembled in accordance with the present invention with body members arranged in a predetermined pattern.
Fig. 5 is a plan view illustrating a baseboard assembled in accordance with the present invention with body members arranged in an alternative predetermined pattern.
Fig. 6 is a schematic perspective view illustrating an alternative embodiment of step (3) of the inventive method.
Fig. 7 is schematic plan view illustrating an embodiment of step (4) of the inventive method.
Fig. 8 is a schematic perspective view illustrating yet another embodiment of step (3) of the inventive method.

### Description of embodiments

The present invention will now be described more fully hereinafter with reference to the accompanying drawings, in which preferred embodiments of the invention are shown.

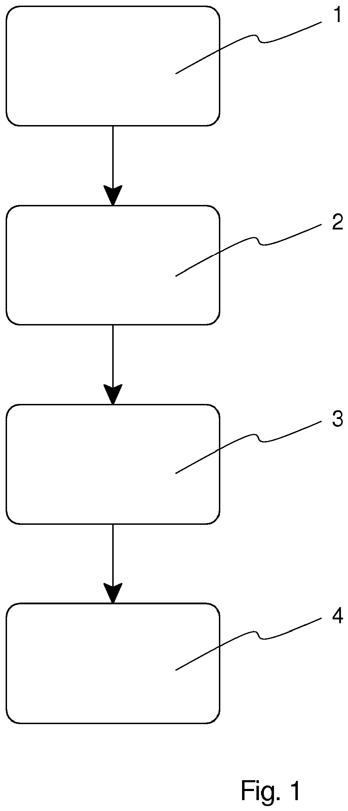

In Fig. 1, to which reference now is made, a flow chart is shown illustrating a method in accordance with the present invention for recycling of tile material comprising compressed mineral fibre material.

The method comprises the steps of
(1) collecting the tile material, the tile material being in the form of at least one of waste material generated during manufacturing of tiles, residual material generated during installation of tiles, and tiles obtained from installed tile systems after end of life,
(2) conversion of the tile material into a plurality of body members,
(3) assembling a baseboard by arranging the plurality of body members on a carrier layer and fixing them thereto, and
(4) conversion of the baseboard into at least two tiles.

The tile material collected in step (1) may thus origin from waste material generated during manufacturing of tiles comprising compressed mineral fibre material. For instance, such tiles may be cut out from baseboards, and depending on the size of the baseboards and of the desired size of the tiles, waste material in the form of cut-away perimeter sections may be generated. The waste material may also origin from tiles rejected during manufacturing. Thus, this waste material generated during manufacturing may be used as tile material in the present invention.

Further, when tiles comprising compressed mineral fibre material are installed in a room, for instance as tiles in a tile system such as a suspended ceiling system, perimeter tiles may have to be trimmed in order to fit. Thus, the sections trimmed or removed from the tiles form residual material which may be used as tile material in the method according to the present invention. The residual material may also be formed by remaining tiles after completed installation.

Finally, after the end of life of tile system, the tiles included in the tile system may be used as tile material in the inventive method.

Some of the collected tile material may be provided with a surface layer. In some cases, the surface layer may be removed in accordance with the present invention.

In the second step (2), the tile material is converted into a plurality of body members. The collected tile material comprises a plurality of tile elements, and during the conversion of the tile material, each tile element is divided or split into body members of desired shape and size.

The tile material may be converted into the plurality of body members by a sawing, milling or cutting operation. The cutting operation may involve cutting with a cutting blade, water jet cutting or laser beam cutting.

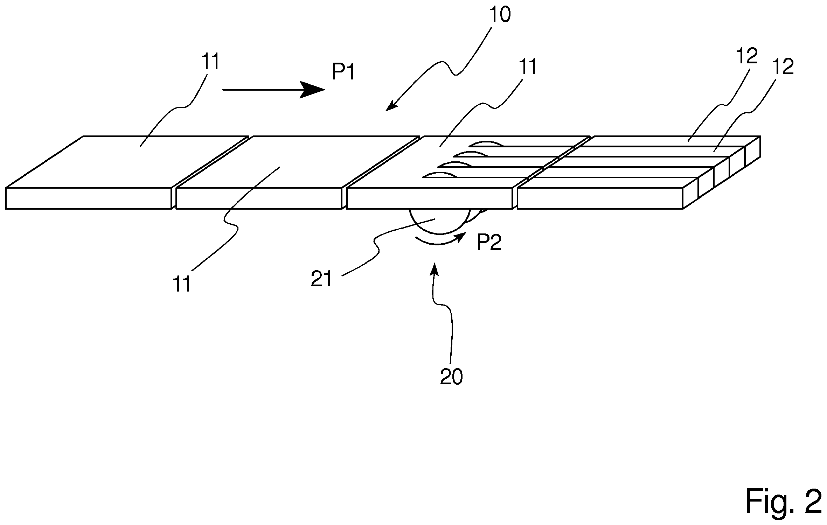

In Fig. 2, an embodiment of the second step is illustrated. In the shown embodiment, tile material 10 obtained during step 1 of the inventive method, for instance from a demounted tile system after end of life, is fed in the direction indicated by arrow P1 by a not shown conveyor means to a cutting station 20 where four knife discs 21 rotating in the direction indicated by arrow P2 engage with the tile material 10 for cutting up each tile element 11 making up the tile material 10 into five body members 12, each having an elongated rod shape with a rectangular cross section.

In the shown embodiment, the tile material 10 comprises equal sized tile elements 11. It is understood that the tile elements making up the tile material may be of different sizes. Thus, the tile elements may have different widths and/ or lengths. Also, some tile elements may have sections broken away. However, the thickness of the tile elements is preferably the same for all tiles.

In the shown embodiment, the tile material 10 is converted into a plurality of body members 12 of a uniform size. However, it is understood that body members of different sizes may be also be produced, for instance by arranging the cutting station 20 in a different manner, e.g. varying the distance between the knife discs 21.

The body members 12 may have a width in the range of 10 - 100 mm, a height in the range of 10 - 100 mm and a length in the range of 400 - 3 000 mm.

It is also understood that the shape of the body members may be different. For instance, the body members may have a V-shape or an hour glass shape.

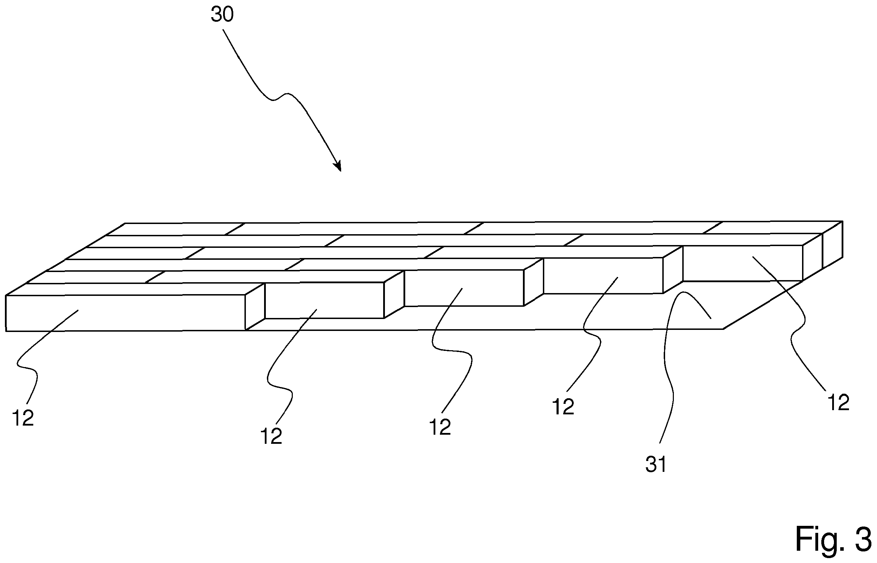

In the third step (3), a baseboard 30 is assembled by arranging the plurality of body members 12 on a carrier layer 31 and fixing them thereto, as illustrated in Fig. 3.

The carrier layer 31 may be chosen from the group consisting of a fabric, a veil, a non-woven mat, a non-woven tissue, a virgin baseboard or a combination thereof. By virgin baseboard is meant a premade baseboard.

The body members 12 may be fixed to the carrier layer 31 for instance by means of an adhesive, by heat treatment, by stitching or by velcro fixing.

The adhesive may be an organic glue, such as latex or PVOH, or an inorganic adhesive, such as silicate or a combination thereof.

The adhesive may be coated on the carrier layer, or alternatively, the adhesive may be impregnated with the adhesive. The adhesive may be arranged to be activated, for instance by heating.

Fixing by means of heat treatment may comprise melting the mineral fibres and joining them to the carrier layer in the interface between the plurality of body members and the carrier layer. The heat treament may comprise a welding operation, such as laser welding.

In addition to fixing the body members 12 to the carrier layer 31, adjacent body members 12 may also be fixed to each other, for instance by means of an adhesive, by heat treatment, by stitching or by velcro fixing.

The plurality of body members 12 may be arranged on the carrier layer 31 in a predetermined pattern.

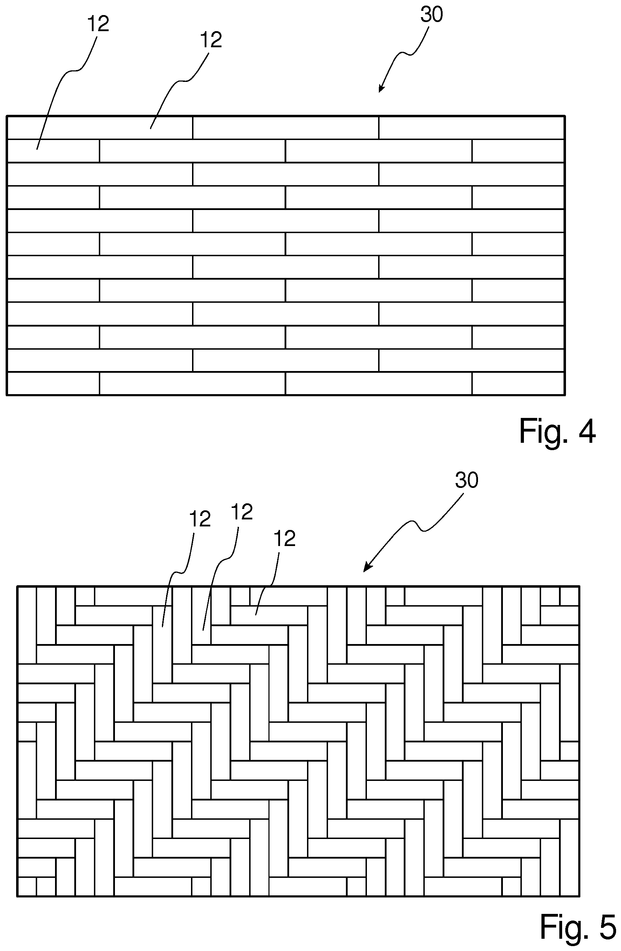

The plurality of body members 12 may be arranged with a uniform orientation in the predetermined pattern. Fig. 3, to which reference now is made, illustrates arrangement of body members 12 on the carrier layer 31 with a uniform orientation in a brick pattern. Some body members have been omitted for sake of clarity. In Fig. 4, an assembled baseboard 30 with body members 12 arranged in brick a pattern is shown from above.

It is understood that the body members 12 alternatively may be arranged with a non-uniform orientation in the predetermined pattern. For instance, the body members 12 may be arranged in a herringbone pattern, as illustrated in Fig. 5.

The plurality of body members 12 may be arranged in a single tier on the carrier layer 31 as shown in Fig. 3. Alternatively, the body members 12 may be arranged in at least two tiers.

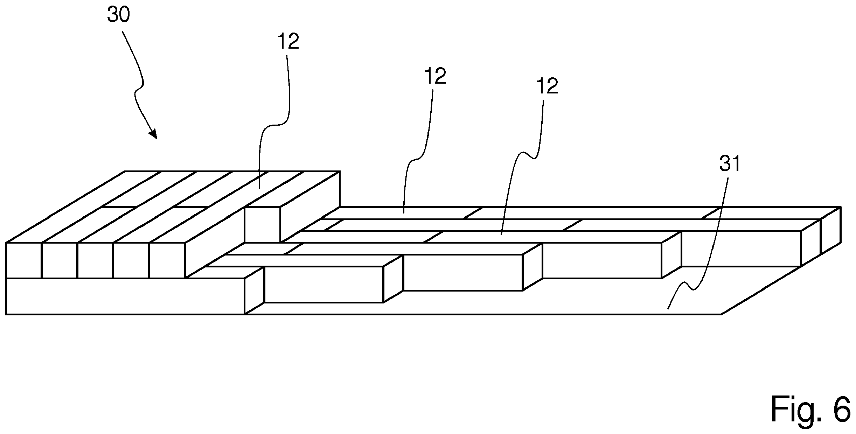

Fig. 6, to which reference now is made, illustrates arrangement of body members 12 on the carrier layer 31 in two tiers. Some body members have been omitted for sake of clarity. The orientation of the body members 12 in the first tier is different from the orientation of the body members 12 in the second tier. The body members 12 of each tier is arranged in a brick pattern. It is understood that in embodiments comprising at least two tiers, body members included in a superimposed tier are indirectly fixed to the carrier layer via body members included in a subjacent tier.

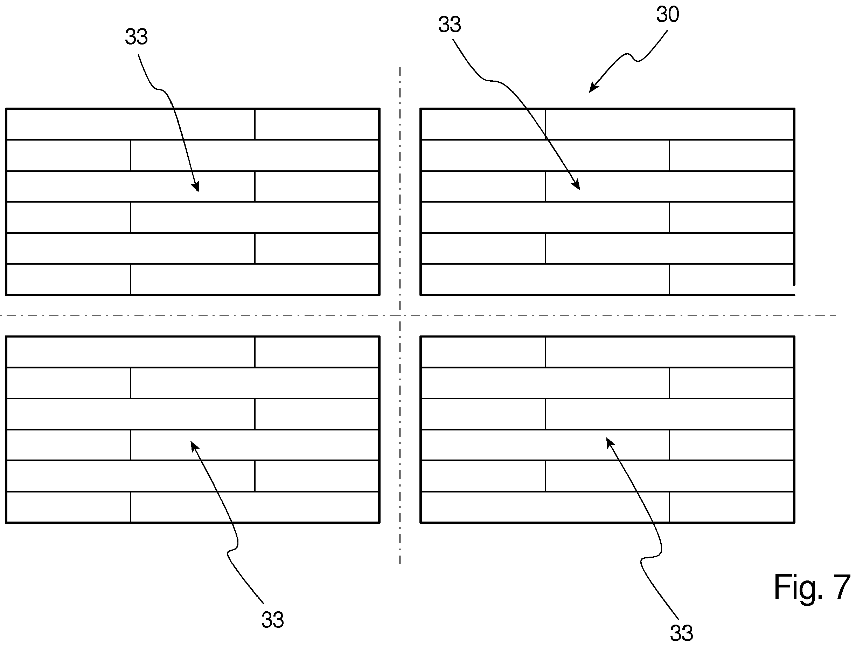

In the fourth step (4), the assembled baseboard 30 is converted into at least two tiles. Fig. 7 illustrates a baseboard 30 which has been divided into four new tiles 33. The conversion of the baseboard 30 into tiles 33 may comprise a sawing or cutting operation. The cutting operation may comprise cutting with cutting blade, water jet or laser beam.

Due to the fact that the baseboard is assembled by arranging a plurality of body members on a carrier layer and fixing them thereto, a high degree of freedom is provided when dimensioning the baseboard. It may thus be enabled to provide a baseboard which can be converted to a desired number of tiles of desired size. It may also be ensured that this conversion can be made without generation of any waste material.

The present invention thus relates to method for recycling of tile material collected from various points in the life cycle of tiles made of compressed mineral fibre material. By converting the tile material into body members and subsequently assembling a baseboard by arranging the body members on a carrier layer and fixing them thereto, properties of the tile material may be preserved and re-used in new tiles formed form the baseboard. For instance, the tiles of a tile system, such as a suspended ceiling, may after end of life have a non-aesthetic appearance but may still be fully functional with regard to sound absorption, and this sound absorption property of the tile material may be preserved by means of the invention.

It will be appreciated that the present invention is not limited to the embodiments shown.

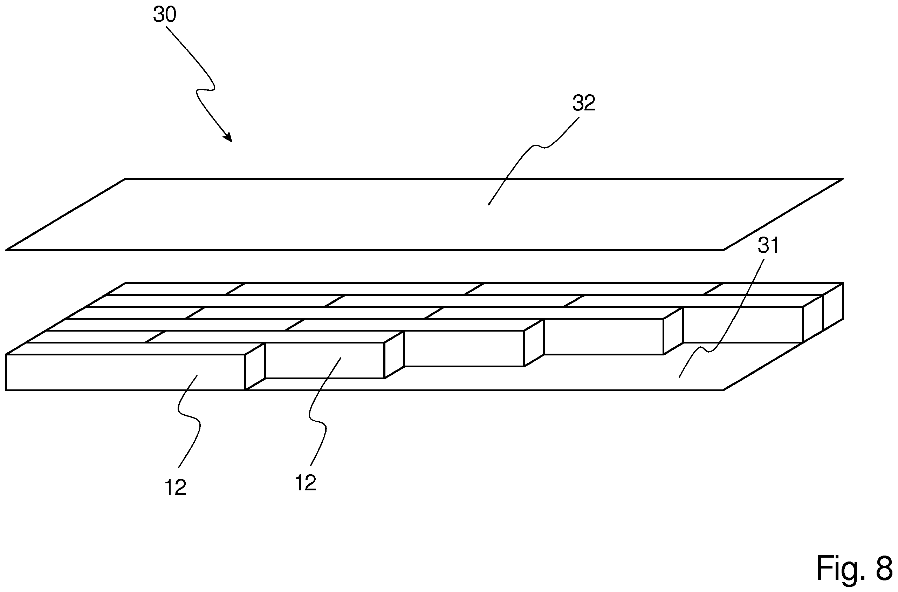

The step of assembling a baseboard 30 may further comprise fixing a top layer 32 to the plurality of body members 12 on a side opposite to the carrier layer 31, as shown in Fig. 8. The top layer 32 may be chosen from the group consisting of a fabric, a veil, a non-woven mat, a non-woven tissue, a virgin baseboard or a combination thereof. For instance, a carrier layer 31 and a top layer 32 in the form of virgin baseboards may be used with the body members 12 arranged therebetween in a sandwiched configuration.

It is also conceivable to convert the tile material into body members of other shapes than those described above, such as body members having a parallelepiped shape or having a triangular cross section.

The body members may be given a shape enabling interlocking of adjacent body members. For instance, adjoining side edges of the body members may be provided with a tongue and groove configuration. Alternatively, the body members may also have a geometrical shape fitting for a jigsaw pattern.

It is further conceivable to arrange the body members in other patterns than those described above. For instance, the body members may be arranged in a spiral pattern or a framed pattern, i.e. such that perimeter body members form a frame enclosing the remaining body members.

Several modifications and variations are thus conceivable within the scope of the invention defined by the appended claims.

## Claims

1. A method for recycling of tile material (10) comprising compressed mineral fibre material and being in the form of at least one of waste material generated during manufacturing of tiles, residual material generated during installation of tiles, and tiles obtained from installed tile systems after end of life, comprising
collecting the tile material (10),
conversion of the tile material (10) into a plurality of body members (12), **characterized in that** the method further comprises the steps of :
assembling a baseboard (30) by arranging the plurality of body members (12) on a carrier layer (31) and fixing them thereto, and
conversion of the baseboard (30) into at least two tiles (33).

2. The method according to claim 1, wherein assembling a baseboard (30) comprises fixing the plurality of body members (12) to the carrier layer (31) by means of an adhesive.

3. The method according to claim 1 or 2, wherein assembling a baseboard (30) comprises fixing adjacent body members (12) to each other.

4. The method according to any one of claims 1-3, further comprising the step of removing any surface layer associated with the collected tile material (10) before conversion of the tile material (10) to a plurality of body members (12).

5. The method according to any one of claims 1-4, wherein assembling a baseboard (30) comprises arranging the plurality of body members (12) on the carrier layer (31) in a predetermined pattern.

6. The method according to claim 5, wherein the plurality of body members (12) is arranged with a uniform orientation in the predetermined pattern.

7. The method according to claim 5, wherein the plurality of body members (12) is arranged in a non-uniform orientation in the predetermined pattern.

8. The method according to any one of claims 5-7, wherein the plurality of body members (12) is arranged in a single tier in the predetermined pattern.

9. The method according to any one of claims 5-7, wherein the plurality of body members (12) is arranged in at least two tiers in the predetermined pattern.

10. The method according to any one of claims 1-9, wherein the carrier layer (31) is chosen from the group consisting of a fabric, a veil, a non-woven mat, a non-woven tissue, a virgin baseboard or a combination thereof.

11. The method according to any one of claims 1-10, wherein assembling a baseboard (30) comprises fixing a top layer (32) to the plurality of body members (12) on a side opposite to the carrier layer (31).

12. The method according to any one of claims 1-11, wherein conversion of the tile material (10) into a plurality of body members (12) comprises producing body members of a uniform size and/or shape.

13. The method according to any one of claims 1-11, wherein conversion of the tile material (10) into a plurality of body members (12) comprises producing body members (12) of a non-uniform size and/or shape.

14. The method according to any one of claims 1-13, wherein conversion of the tile material (10) into a plurality of body members (12) comprises producing body members (12) having a width in the range of 10 - 100 mm, a height in the range of 10 - 100 mm and a length in the range of 400 - 3 000 mm.

15. The method according to any one of claims 1-14, wherein conversion of the tile material (10) into a plurality of body members (12) and/or conversion of the baseboard (30) into at least two ceiling tiles (33) comprises a cutting or sawing operation.

## Patentansprüche

1. Verfahren zum Wiederverwerten von Fliesenmaterial (10), welches komprimiertes Mineralfasermaterial umfasst und in Form von Abfallmaterial, das während einer Herstellung von Fliesen entsteht, und/oder Restmaterial, das während einer Verlegung von Fliesen entsteht, und/oder Fliesen, die aus verlegten Fliesensystemen nach Ablauf der Lebensdauer erhalten werden, vorliegt, umfassend Sammeln des Fliesenmaterials (10),
Umwandlung des Fliesenmaterials (10) in mehrere Körperelemente (12),
**dadurch gekennzeichnet, dass** das Verfahren ferner die Schritte umfasst zum:
Zusammensetzen einer Grundplatte (30), indem die mehreren Körperelemente (12) auf einer Trägerschicht (31) angeordnet und daran befestigt werden, und
Umwandlung der Grundplatte (30) in mindestens zwei Fliesen (33).

2. Verfahren nach Anspruch 1, wobei das Zusammensetzen einer Grundplatte (30) ein Befestigen der mehreren Körperelemente (12) an der Trägerschicht (31) mittels eines Klebstoffs umfasst.

3. Verfahren nach Anspruch 1 oder 2, wobei das Zusammensetzen einer Grundplatte (30) ein Befestigen benachbarter Körperelemente (12) aneinander umfasst.

4. Verfahren nach einem der Ansprüche 1-3, ferner umfassend den Schritt zum Entfernen einer Oberflächenschicht, die mit dem gesammelten Fliesenmaterial (10) verbunden ist, vor der Umwandlung des Fliesenmaterials (10) in mehrere Körperelemente (12).

5. Verfahren nach einem der Ansprüche 1-4, wobei das Zusammensetzen einer Grundplatte (30) ein Anordnen der mehreren Körperelemente (12) auf der Trägerschicht (31) in einem vorbestimmten Muster umfasst.

6. Verfahren nach Anspruch 5, wobei die mehreren Körperelemente (12) mit einer gleichmäßigen Ausrichtung in dem vorbestimmten Muster angeordnet werden.

7. Verfahren nach Anspruch 5, wobei die mehreren Körperelemente (12) in einer ungleichmäßigen Ausrichtung in dem vorbestimmten Muster angeordnet werden.

8. Verfahren nach einem der Ansprüche 5-7, wobei die mehreren Körperelemente (12) in einer einzigen Ebene in dem vorbestimmten Muster angeordnet werden.

9. Verfahren nach einem der Ansprüche 5-7, wobei die mehreren Körperelemente (12) in mindestens zwei Ebenen in dem vorbestimmten Muster angeordnet werden.

10. Verfahren nach einem der Ansprüche 1-9, wobei die Trägerschicht (31) aus der Gruppe ausgewählt wird, die aus einem Gewebe, einem Schleier, einer Vliesmatte, einem Vliesstoff, einer unbehandelten Grundplatte oder einer Kombination daraus besteht.

11. Verfahren nach einem der Ansprüche 1-10, wobei das Zusammensetzen einer Grundplatte (30) ein Befestigen einer Oberschicht (32) an den mehreren Körperelementen (12) auf einer Seite gegenüber zu der Trägerschicht (31) umfasst.

12. Verfahren nach einem der Ansprüche 1-11, wobei die Umwandlung des Fliesenmaterials (10) in mehrere Körperelemente (12), ein Erzeugen von Körperelementen mit gleichmäßiger Größe und/oder Form umfasst.

13. Verfahren nach einem der Ansprüche 1-11, wobei die Umwandlung des Fliesenmaterials (10) in mehrere Körperelemente (12), ein Erzeugen von Körperelementen (12) mit ungleichmäßiger Größe und/oder Form umfasst.

14. Verfahren nach einem der Ansprüche 1-13, wobei die Umwandlung des Fliesenmaterials (10) in mehrere Körperelemente (12) ein Erzeugen von Körperelementen (12) mit einer Breite im Bereich von 10-100 mm, einer Höhe im Bereich von 10-100 mm und einer Länge im Bereich von 400-3000 mm umfasst.

15. Verfahren nach einem der Ansprüche 1-14, wobei die Umwandlung des Fliesenmaterials (10) in mehrere Körperelemente (12) und/oder die Umwandlung der Grundplatte (30) in mindestens zwei Deckenfliesen (33) einen Schneide- oder Sägevorgang umfasst.

## Revendications

1. Procédé de recyclage de matériaux de dalles (10) comprenant du matériau fibreux minéral compressé et étant sous la forme d'au moins matériau parmi un déchet de matériau généré pendant la fabrication de dalle, un matériau résiduel généré pendant l'installation des dalles, et des dalles obtenues à partir de système de dalles installés après leur fin de vie, comprenant
la collecte du matériau de dalles (10),
la conversion du matériau de dalles (10) en une pluralité d'éléments de corps (12),
**caractérisé en ce que** le procédé comprend en outre les étapes suivantes :
assemblage d'une plinthe (30) en disposant la pluralité d'éléments de corps (12) sur une couche support (31) et en les y fixant, et
conversion de la plinthe (30) en au moins deux dalles (33).

2. Procédé selon la revendication 1, dans lequel l'assemblage d'une plinthe (30) comprend la fixation de la pluralité d'éléments de corps (12) à la couche support (31) au moyen d'un adhésif.

3. Procédé selon la revendication 1 ou 2, dans lequel l'assemblage d'une plinthe (30) comprend la fixation de la pluralité d'éléments de corps adjacents (12) les uns aux autres.

4. Procédé selon l'une quelconque des revendications 1 à 3, comprenant en outre l'étape d'élimination de toute couche de surface associée au matériau de dalles collecté (10) avant la conversion du matériau de dalles (10) en une pluralité d'éléments de corps (12).

5. Procédé selon l'une quelconque des revendications 1 à 4, dans lequel l'assemblage d'une plinthe (30) comprend la disposition de la pluralité d'éléments de corps (12) sur la couche support (31) suivant un modèle prédéterminé.

6. Procédé selon la revendication 5, dans lequel la pluralité d'éléments de corps (12) sont disposés avec une orientation uniforme dans le modèle prédéterminé.

7. Procédé selon la revendication 5, dans lequel la pluralité d'éléments de corps (12) sont disposés avec une orientation non-uniforme dans le modèle prédéterminé.

8. Procédé selon l'une quelconque des revendications 5 à 7, dans lequel la pluralité d'éléments de corps (12) sont disposés sur un niveau unique dans le modèle prédéterminé.

9. Procédé selon l'une quelconque des revendications 5 à 7, dans lequel la pluralité d'éléments de corps (12) sont disposés sur au moins deux niveaux dans le modèle prédéterminé.

10. Procédé selon l'une quelconque des revendications 1 à 9, dans lequel la couche support (31) est choisie dans le groupe composé d'un tissu, d'un voile, d'une natte non tissée, d'un tissu non tissé, d'une plinthe vierge ou leurs combinaisons.

11. Procédé selon l'une quelconque des revendications 1 à 10, dans lequel l'assemblage d'une plinthe (30) comprend la fixation d'une couche supérieure (32) à la pluralité d'éléments de corps (12) sur une face opposée à la couche support (31).

12. Procédé selon l'une quelconque des revendications 1 à 11, dans lequel la conversion du matériau de dalles (10) en une pluralité d'éléments de corps (12) comprend la production d'éléments de corps de taille et/ou de forme uniforme.

13. Procédé selon l'une quelconque des revendications 1 à 11, dans lequel la conversion du matériau de dalles (10) en une pluralité d'éléments de corps (12) comprend la production d'éléments de corps (12) de taille et/ou de forme non-uniforme.

14. Procédé selon l'une quelconque des revendications 1 à 13, dans lequel la conversion du matériau de dalles (10) en une pluralité d'éléments de corps (12) comprend : la production d'éléments de corps (12) ayant une largeur de l'ordre de 10 à 100 mm, une hauteur de l'ordre de 10 à 100 mm et une longueur de l'ordre de 400 à 3000 mm.

15. Procédé selon l'une quelconque des revendications 1 à 14, dans lequel la conversion du matériau de dalles (10) en une pluralité d'éléments de corps (12) et/ou la conversion de la plinthe (30) en au moins deux dalles de plafond (33) comprend une opération de découpage ou de sciage.
